# DEMANDE DE BREVET EUROPEEN

(11) **EP 1 783 290 A2**
(43) Date de publication de la demande: **09.05.2007**
(21) Numéro de dépôt: 06352024.1
(22) Date de dépôt: 06.11.2006
(51) Int. Cl.: E04B 2/88

(54) **Dispositif de fixation d'une cloison à une structure fixe de bâtiment, et application**

(30) Priorité: 07.11.2005 FR 0511292
(71) Demandeur: Orion Financement S.A., 11230 Chalabre (FR)
(72) Inventeur: Thierry, Laurent, 09500 Mirepoix (FR)
(74) Mandataire: Cabinet BARRE LAFORGUE & associés

(57) **Abrégé**

L'invention concerne un dispositif (1) de fixation et un procédé pour installer une cloison -notamment un faux plafond ou une cloison d'habillage de murs- à une structure (20) fixe de bâtiment (éléments de charpente, plancher, murs). Ce dispositif (1) de fixation comprend une tige (12) d'ancrage présentant une portion filetée ayant une extrémité (12a) libre acérée ; des moyens d'assemblage permettant son assemblage à un élément (40) de cloison ; un emporte-pièce (11) permettant un emmanchement de la tige (12) d'ancrage et doté d'une extrémité (11a) affûtée adaptée pour pouvoir réaliser une découpe dans une nappe d'isolation.

## Description

L'invention concerne les méthodes et les dispositifs permettant de fixer et/ou de suspendre des cloisons, telles que faux plafonds et cloisons d'habillage de murs (on parle aussi de contre cloisons, de cloisons de doublage) à des structures fixes de bâtiment -notamment des éléments de charpente, un plancher, un mur-.

L'invention concerne plus particulièrement l'installation de cloisons derrière lesquelles des nappes d'isolation thermique et/ou phonique peuvent être dissimulées et en particulier, des nappes d'isolation composées au moins en partie en un matériau de structure fibreuse (par exemple ouate, laine minérale, laine animale...). Ces nappes d'isolation peuvent être monocouches ou être formées de la superposition de plusieurs couches de matériau(x). Eventuellement, parmi ces couches, on peut trouver un ou plusieurs films continus, réalisés en matériau réflecteur et/ou en matériau polymérique, intercalés entre les couches fibreuses et/ou recouvrant les faces de ces couches.

L'installation et le maintien en place d'éléments de cloison, avec la(les) nappe(s) d'isolation, font classiquement intervenir des dispositifs de fixation (on parle aussi de dispositifs de suspente dans le cas des faux plafonds) qui servent d'organes de connexion entre ces éléments de cloison et la structure fixe de bâtiment.

Dans tout le texte, le terme "élément de cloison" permet de désigner aussi bien une cloison en tant que telle, qu'un panneau constitutif d'une telle cloison ou qu'un profilé (ou rail) d'une ossature métallique destinée à entrer en prise avec une cloison ou un panneau.

Les dispositifs de fixation présentent en général au moins deux parties fonctionnelles essentielles. La première de ces deux parties fonctionnelles est adaptée pour pouvoir opérer une liaison avec au moins un élément de cloison. La deuxième partie fonctionnelle permet d'ancrer le dispositif de fixation dans la masse de la structure fixe de bâtiment.

La présente invention concerne plus particulièrement cette deuxième partie fonctionnelle des dispositifs de fixation.

Parmi les dispositifs de fixation adaptés pour réaliser une connexion solide entre des éléments de cloison et une structure fixe de bâtiment tout en permettant de maintenir en place une nappe d'isolation thermique et/ou phonique, dans l'interstice laissé entre la structure fixe de bâtiment et la cloison assemblée, on peut citer en exemple le dispositif de fixation décrit par FR 2 581407.

Dans ce dispositif de fixation particulier, la partie fonctionnelle, qui permet un ancrage rigide à la structure fixe de bâtiment, consiste en une tige filetée adaptée pour pouvoir être vissée directement dans la masse de la structure fixe de bâtiment.

Pour immobiliser une nappe d'isolation dans l'interstice laissé entre la structure fixe de bâtiment et la cloison à installer, celle-ci est plus ou moins tendue entre plusieurs de ces dispositifs de fixation implantés en plusieurs zones d'ancrage, choisies sur une ou sur différentes structures fixes de bâtiment. La tige filetée de chacun de ces dispositifs de fixation est vissée dans la masse de la structure fixe de bâtiment et au travers de la nappe d'isolation préalablement disposée à recouvrement des zones d'ancrage.

Simple, de prime abord, le vissage d'une tige filetée d'un tel dispositif de fixation, dans l'épaisseur de la structure fixe de bâtiment et au travers de la nappe d'isolation, se révèle souvent délicat en raison des fibres du matériau d'isolation qui viennent s'enrouler et s'entortiller autour de la tige filetée. La progression de la tige filetée, à travers l'épaisseur de la nappe d'isolation et à travers la structure fixe de bâtiment, se trouve de ce fait considérablement contrariée.

Mais, outre la difficulté à mettre en place un tel dispositif de fixation, en raison de la déstructuration du réseau de fibres du matériau d'isolation causée par l'enroulement des fibres sur la tige filetée, le pouvoir isolant de la nappe d'isolation peut également s'en trouver sensiblement altéré.

L'invention a pour objectif de remédier aux inconvénients précédemment évoqués. En particulier, l'invention vise à proposer un dispositif de fixation qui soit adapté pour pouvoir réaliser une connexion entre des éléments de cloison et une structure fixe de bâtiment tout en permettant de maintenir en place une nappe d'isolation, thermique et/ou phonique, sans détérioration de ses propriétés d'isolation.

L'invention vise de façon générale à proposer un dispositif de fixation pour fixer et/ou pour suspendre des éléments de cloison à des structures fixes de bâtiment, qui soit amélioré tant en terme de facilité et rapidité d'utilisation qu'en terme de coûts de fabrication.

A cet effet, l'invention concerne un dispositif de fixation d'une cloison, telle qu'un faux plafond et éventuellement une contre cloison, à une structure fixe de bâtiment, comprenant :
- une tige d'ancrage présentant une portion filetée ayant une extrémité libre acérée de sorte qu'elle peut percer ladite structure fixe de bâtiment et qu'elle peut être vissée dans celle-ci,
- des moyens d'assemblage adaptés pour permettre son assemblage à un élément de cloison,
caractérisé en ce qu'il comprend également :
- un dispositif, dit emporte-pièce, doté d'un alésage traversant et d'une extrémité affûtée adaptée pour pouvoir réaliser une découpe dans une nappe d'isolation.

Selon l'invention, la tige d'ancrage et l'alésage traversant de l'emporte-pièce sont de dimensions adaptées pour permettre un emmanchement de la tige d'ancrage dans l'emporte-pièce et pour permettre à sa portion filetée de dépasser de l'emporte-pièce de façon à pouvoir s'étendre dans la structure fixe de bâtiment.

L'invention, définie dans sa portée la plus générale, n'est en rien limitée, en termes de caractéristiques structurelles, par lesdits moyens d'assemblage qui permettent au dispositif de fixation de retenir et de maintenir en place les éléments de cloison (par exemple, des profilés constitutifs d'une ossature métallique destinée à recevoir le(s) panneau(x) formant la cloison finale). Ces moyens d'assemblage, qui peuvent être de structures très diverses, sont très largement décrits en eux-mêmes dans l'état de la technique. Classiquement, ils comprennent notamment un organe traditionnellement appelé « tête d'assemblage », spécifiquement conçu pour pouvoir être assemblé à un profilé d'une ossature métallique.

Au demeurant, une particularité essentielle de l'invention réside dans les moyens mis en oeuvre pour immobiliser une nappe d'isolation entre un élément de cloison et une structure fixe de bâtiment.

En particulier, l'emporte-pièce d'un dispositif de fixation selon l'invention, utilisé de façon appropriée comme notamment précisé dans le procédé ci-après, permet de perforer et de découper proprement le matériau d'isolation et, en particulier, la(les) couche(s) fibreuse(s) constitutives dudit matériau. Une tige d'ancrage, emmanchée dans l'emporte-pièce transperçant le matériaux d'isolation, peut alors être vissée dans la masse de la structure fixe de bâtiment sans que les fibres du matériau d'isolation ne viennent contrarier l'opération, notamment en s'enroulant autour de son pas de vis. Par la même occasion, on évite également que la(les) couche(s) fibreuse(s) de la nappe d'isolation ne soit(soient) ainsi déstructurée(s).

Egalement, l'utilisation d'un dispositif de fixation selon l'invention n'occasionne dans la nappe d'isolation qu'une perforation de taille relativement faible qui, finalement, se trouve comblée par l'emporte-pièce et par la tige d'ancrage. La déstructuration de la nappe d'isolation est insignifiante. Le matériau d'isolation conserve globalement toutes ses propriétés mécaniques et physiques.

L'invention s'étend à l'utilisation d'un tel dispositif de fixation dans le cadre de la mise en oeuvre d'un procédé pour fixer un élément de cloison à une structure fixe de bâtiment et pour immobiliser, entre ledit élément de cloison et ladite structure fixe de bâtiment, une nappe d'isolation comprenant au moins une couche de structure fibreuse. Dans ce procédé, on réalise les opérations suivantes :
- on choisit, sur une structure fixe de bâtiment, une zone d'ancrage adaptée pour pouvoir recevoir un dispositif de fixation conforme à l'invention,
- on positionne au moins une nappe d'isolation à recouvrement de ladite zone d'ancrage,
- au niveau de cette zone d'ancrage, on enfonce, dans ladite structure fixe de bâtiment et au travers de la nappe d'isolation, l'emporte-pièce dudit dispositif de fixation, puis
- on visse la tige d'ancrage dudit dispositif de fixation dans la structure fixe de bâtiment, au travers dudit emporte-pièce et au travers de la nappe d'isolation perforée par cet emporte-pièce, et
- on assemble le reste du dispositif de fixation et l'élément de cloison.

La tige d'ancrage n'est donc pas directement vissée dans la masse de la structure fixe de bâtiment et au travers de la nappe d'isolation. Au préalable, on implante l'emporte-pièce dans la structure fixe de bâtiment. Ce faisant, on réalise par la même occasion une découpe de la nappe d'isolation et en particulier, une découpe des fibres du matériau.

L'emporte-pièce est facile à enfoncer dans la structure fixe de bâtiment, l'opération pouvant être réalisée de manière simple par percussion(s) avec un marteau.

Pour faciliter la pénétration de l'emporte-pièce dans la masse de la structure fixe de bâtiment, avantageusement et selon l'invention, l'emporte-pièce présente une forme globalement tronconique avec une pointe ouverte à bord affûté, éventuellement dentelé.

Avantageusement et selon l'invention, cet emporte-pièce de forme tronconique présente également une base à bord évasé qui s'étend selon une direction centrifuge. Ce bord évasé, ou collet, situé sur la partie opposée à la pointe, permet non seulement d'augmenter la surface de contact destinée au martelage, il permet également de faire butée à l'enfoncement de l'emporte-pièce. En utilisant un tel emporte-pièce, la nappe d'isolation se retrouve ainsi avantageusement épinglée et immobilisée contre la structure fixe de bâtiment.

Par railleurs, en comprimant la nappe d'isolation et en la plaquant contre la surface fixe de bâtiment, cet emporte-pièce permet de renforcer efficacement le contact entre la nappe d'isolation et la structure fixe de bâtiment et améliore l'isolation finale du local.

En particulier, lorsque la nappe d'isolation en question est formée d'une superposition de couches, notamment de films thermoplastiques et/ou de films réflecteurs, l'implantation de l'emporte-pièce à travers la nappe d'isolation n'occasionne pas qu'une simple perforation du matériau, elle ouvre, d'une couche à l'autre, un passage propice aux échanges thermiques par convection. Mais en enfonçant jusqu'à butée cet emporte-pièce, le collet de celui-ci permet de comprimer tout le pourtour de la performation et scelle ainsi les espaces intercalaires entre les différentes couches.

Avantageusement et selon l'invention, on enfonce l'emporte-pièce jusqu'à arriver en butée. Le collet de l'emporte-pièce comprime alors ponctuellement la nappe d'isolation et permet avantageusement de maintenir en place cette nappe d'isolation avec un contact étroit et hermétique avec la structure fixe de bâtiment.

Pour faciliter la mise en place de la tige d'ancrage, avantageusement et selon l'invention, l'alésage traversant de chaque emporte-pièce définit une paroi interne taraudée adaptée pour permettre un emmanchement de la portion filetée de la tige d'ancrage, par vissage. Une fois implanté, au moins partiellement, dans la masse de la structure fixe, un tel emporte-pièce présente également le grand intérêt de pouvoir servir d'organe de guidage facilitant le vissage de la tige d'ancrage dans la structure fixe de bâtiment.

Egalement, la manipulation d'un tel emporte-pièce peut être avantageusement facilitée ; avant de l'enfoncer dans la structure fixe de bâtiment, l'emporte-pièce est connecté à la tige d'ancrage simplement par un engagement de la portion filetée de cette tige d'ancrage sur une partie seulement de l'alésage traversant dudit emporte-pièce. La prise en main de l'emporte-pièce et son enfoncement dans la structure fixe de bâtiment, par l'entremise de la tige d'ancrage, est ainsi considérablement améliorée. Une fois l'emporte-pièce correctement implanté, on achève le vissage de la tige d'ancrage.

Avantageusement et selon l'invention, la tige d'ancrage présente une tête, opposée à l'extrémité libre acérée, adaptée pour pouvoir venir en appui sur le bord évasé de l'emporte-pièce.

En outre, avantageusement et selon l'invention, dans un procédé visant à fixer un élément de cloison à une structure fixe de bâtiment et à immobiliser une nappe d'isolation, entre ledit élément de cloison et ladite structure fixe de bâtiment, on assemble chaque dispositif de fixation conforme à l'invention, à une cloison ou à un panneau constitutif de ladite cloison, par l'intermédiaire d'un profilé métallique constitutif d'une ossature adaptée pour recevoir la cloison finale ou les panneaux qui formeront la cloison finale.

Selon ce mode de réalisation, ledit profilé métallique fait ainsi office d'élément de paroi au sens de l'invention, et un dispositif de fixation selon l'invention comprend une tête d'assemblage spécifiquement adaptée pour pouvoir retenir et maintenir en place ledit profilé.

Cette tête d'assemblage peut être amovible par rapport au reste du dispositif de fixation. Elle peut aussi faire partie intégrante et être normalement indissociable de celui-ci.

Selon un mode de réalisation particulier dans lequel la tête d'assemblage d'un dispositif de fixation selon l'invention est amovible, ledit dispositif de fixation se compose aussi d'une tige de raccordement ; la tige d'ancrage et ladite tête d'assemblage sont raccordées l'une à l'autre par l'intermédiaire de cette tige de raccordement. Des moyens de couplage réciproques sont pourvus à une extrémité de la tige de raccordement et sur ladite tige d'ancrage. Et, ladite tête d'assemblage est dotée de moyens adaptés pour permettre son assemblage sur au moins une longueur de ladite tige de raccordement.

Avantageusement et selon ce mode de réalisation, ladite tige de raccordement est filetée et ladite tige d'ancrage est munie d'une tête à l'intérieur de laquelle est ménagée une cavité taraudée de façon à permettre un raccordement entre la tige de raccordement et la tige d'ancrage, par vissage de ladite tige de raccordement dans ladite cavité.

Avantageusement, une tête d'assemblage d'un dispositif de fixation conforme à l'invention présente un alésage traversant apte à permettre un enfilement de ladite tête d'assemblage au moins sur une longueur de la tige de raccordement. Des moyens de blocage permettent de verrouiller en position la tête d'assemblage par rapport à la tige de raccordement

Ces moyens de blocage peuvent être extérieurs à la tête d'assemblage, et peuvent consister, par exemple, simplement en un(des) boulon(s) de serrage.

Ces moyens de blocage peuvent également faire partie intégrante de la tête d'assemblage. A ce titre, on peut citer en exemple le dispositif décrit dans FR 2 779 467.

Bien entendu, des moyens de connexion autres qu'une tige de raccordement, telle que précédemment évoquée, peuvent également être envisagés pour réaliser l'assemblage entre la tête d'assemblage et la tige d'ancrage conformes à l'invention.

Selon un autre mode de réalisation d'un dispositif de fixation selon l'invention, dans lequel la tête d'assemblage est amovible du reste du dispositif de fixation, ladite tête d'assemblage est avantageusement adaptée pour pouvoir être raccordée directement à une tige d'ancrage conforme à l'invention (sans nécessiter aucune tige de raccordement intermédiaire). Avantageusement et selon l'invention, celle-ci est dotée de moyens adaptés pour permettre son assemblage sur au moins une partie de la tige de raccordement.

En outre, il est à noter qu'un dispositif de fixation selon l'invention peut être utilisé de façon très avantageuse pour fixer un élément de cloison à une structure fixe de bâtiment même s'il n'est nullement prévu d'immobiliser de nappe d'isolation. L'emporte-pièce d'un dispositif de fixation conforme à l'invention permet, en soi, de faciliter considérablement la mise en place de la tige d'ancrage dans la masse d'une structure fixe de bâtiment.

En particulier, l'emporte-pièce d'un dispositif de fixation selon l'invention, dans quasi toutes situations, permet une mise en place de la tige d'ancrage de manière simple, rapide et de qualité (fixation rigide et bien droite par rapport à la direction nominale de pose (verticale, inclinée ou à l'horizontale)), quels que soient l'état de surface et/ou l'inclinaison originels de la zone d'ancrage. En effet, d'implantation par simple percussion, son ancrage de manière rigoureusement droite par rapport à la direction nominale de pose (verticale, inclinée ou à l'horizontale) ne pose aucune difficulté. Une fois en place, l'emporte-pièce sert d'organe de guidage facilitant le vissage de la tige d'ancrage.

L'invention concerne en outre un dispositif de fixation d'une cloison à une structure fixe de bâtiment ainsi qu'un procédé pour mettre en oeuvre un tel dispositif, caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées dans lesquelles :
- la figure 1 est une vue schématique en perspective d'un dispositif de fixation selon un premier mode de réalisation particulier conforme à l'invention, représenté à l'état dissocié,
- la figure 2 est une vue schématique en coupe, par rapport à un plan perpendiculaire à la direction longitudinale d'un profilé, du dispositif de fixation précédent, représenté à l'état assemblé et ancré à une poutre et immobilisant une nappe d'isolation de structure fibreuse,
- la figure 3 est une vue schématique en perspective d'un dispositif de fixation selon un deuxième mode de réalisation particulier conforme à l'invention, représenté avant sa mise en place,
- la figure 4 est une vue schématique en coupe, par rapport à un plan perpendiculaire à la direction longitudinale d'un profilé, du dispositif de fixation précédent, représenté à l'état assemblé et ancré à une poutre et immobilisant une nappe d'isolation multicouche.

Les figures évoquées et la description ci-après illustrent deux exemples, parmi tant d'autres, de dispositifs de fixation 1 et 1' conformes à l'invention. En outre, ces figures et cette description ont principalement pour objectif d'exposer une structure particulière d'un emporte-pièce constitutif d'un dispositif de fixation selon l'invention et ainsi que les avantages d'utiliser un tel dispositif de fixation dans le cadre de l'installation d'une cloison à une structure 20 fixe de bâtiment. En l'espèce, il s'agit de suspendre un faux plafond à une poutre 20 et d'immobiliser une nappe d'isolation entre ces deux éléments.

Dès lors, il convient de noter que, toute autre partie constitutive d'un dispositif de fixation selon l'invention, en particulier, les moyens d'assemblage (par exemple, tête d'assemblage et tige de raccordement) qui interviennent dans la rétention et le maintien en place des éléments de cloison, est décrite principalement à titre d'information visant à une meilleure compréhension de l'invention. Cette description générale ne limite en rien la portée de la présente invention.

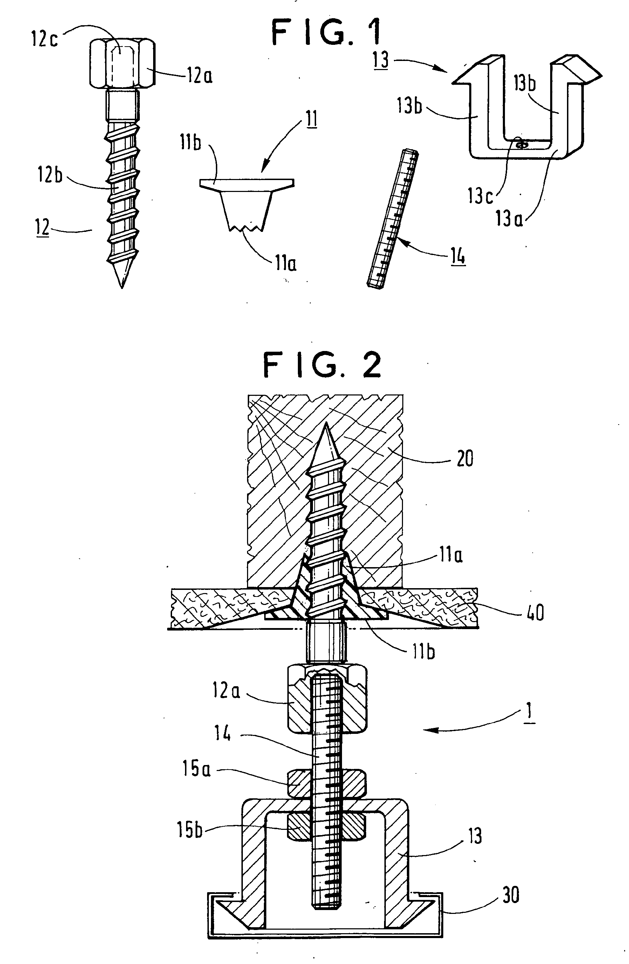

En référence aux figures 1 et 2, un dispositif 1 de fixation selon un premier mode de réalisation conforme à l'invention comprend une tige 12 d'ancrage, un emporte-pièce 11, une tête d'assemblage 13 et une tige 14 de raccordement.

Ces différents éléments, comme illustrés par la figure 2, sont adaptés pour pouvoir collaborer ensemble et pour constituer un ensemble fonctionnel, en l'occurrence un dispositif de suspente, apte à réaliser une connexion rigide entre le profilé 30 et une poutre 20 (faisant office de structure fixe de bâtiment, au sens de l'invention), et pour pouvoir immobiliser, entre ce profilé 30 et cette poutre 20, une nappe 40 d'isolation comprenant au moins une couche de structure fibreuse.

En vue de rendre la description plus claire, on considèrera, dans toute la suite, chacun des éléments constitutifs dudit dispositif de fixation, avec la même orientation que dans une forme assemblée telle que représentée à la figure 1 (c'est-à-dire, un dispositif 1 de fixation solidement et verticalement ancré dans la masse d'une structure 20 fixe de bâtiment), les termes "haut", "bas", "supérieur", "inférieur" se référant à cette position.

L'emporte-pièce 11 est de forme globalement tronconique et est pourvu d'une pointe 11a ouverte à bord extrême libre affûté et dentelé. Dans la partie opposée à cette pointe ouverte, l'emporte-pièce 11 présente une section évasée qui se prolonge en un collet 11b. L'emporte-pièce 11 présente un alésage traversant dont la paroi interne est taraudée.

La tige 12 d'ancrage qui, telle que représentée, consiste en une vis auto-taraudeuse. Ici, le terme de "vis auto-taraudeuse" est utilisé pour désigner de manière très générale toute vis dont la tige filetée est adaptée pour pouvoir elle-même percer un corps solide (par exemple, bois, plâtre, brique, béton, métal...) et permettre ainsi son ancrage dans la masse de ce corps solide.

Au vu de sa forme particulière telle que représentée, on peut aussi parler de tire-fond.

De manière schématique, cette tige 12 d'ancrage présente une portion 12b filetée à extrémité libre acérée qui lui permet de pouvoir être vissée directement dans la poutre 20. Par ailleurs, cette tige 12 d'ancrage présente une tête 12a avec une cavité 12c taraudée.

Le taraudage de l'alésage traversant de l'emporte-pièce 11 et le filetage de la tige 12 d'ancrage sont conjugués. Egalement, la tige 12 d'ancrage et l'alésage traversant dudit emporte-pièce 11 présentent des dimensions adaptées pour permettre à la portion filetée 12b de la tige 12 d'ancrage de dépasser de l'emporte-pièce 11 de façon à pouvoir s'étendre dans la masse de la poutre 20.

La tête d'assemblage 13 est de géométrie adaptée pour pouvoir former une liaison bloquante avec un profilé 30.

Cette tête d'assemblage 13, en forme de U renversé, est formée d'une platine 13a supérieure horizontale et de deux pattes 13b s'étendant vers le bas à partir de deux côtés opposés de la platine 13a et dans des plans verticaux. Les pattes 13b de cette tête d'assemblage 13, comme illustrées, permettent un blocage et un maintien en position du profilé 30, essentiellement par déformation élastique des pattes 13b. La platine 13a est percée en son milieu d'un alésage 13c traversant.

La tige 14 de raccordement est ronde et filetée. Le filetage de cette tige 14 de raccordement et le taraudage de la cavité 12c de la tige 12 d'ancrage sont conjugués. La tige 14 de raccordement est destinée à venir se visser dans la cavité 12c de la tête 12a.

Egalement, la section de la tige 14 de raccordement est adaptée pour lui permettre de s'engager et de coulisser dans l'alésage 13c traversant de la tête d'assemblage 13.

Après avoir choisi la position finale de la tête d'assemblage 13 sur la tige 14 de raccordement, deux boulons 15a et 15b de serrage rapportés permettent d'assurer un blocage en position de celle-ci.

Bien entendu, l'utilisation de têtes d'assemblage autres que celle illustrée dans les figures annexées peut être envisagée. Cette tête d'assemblage particulière n'est donnée qu'à titre d'exemple ; elle ne limite en rien la portée de l'invention. Au demeurant, la tête d'assemblage objet du brevet FR 2 581 407 peut être utilisée de manière très satisfaisante.

Le montage de ce dispositif 1 de fixation est particulièrement simple et rapide, même lorsqu'il est question de l'implanter sous la face inférieure d'une structure fixe de bâtiment, comme sous un plafond ou une poutre 20 comme illustré par la figure 2.

Pour ce faire, dans un premier temps, on fixe l'emporte-pièce 11 dans la masse de la poutre 20, en l'enfonçant au moyen d'un marteau. On prendra soin de planter l'emporte-pièce 11 le plus verticalement possible. L'opération ne présente aucune difficulté majeure, même si la surface d'ancrage n'est pas parfaitement plane et/ou ne se trouve pas à l'horizontale.

Il n'est pas nécessaire, dans cette première étape d'enfoncer l'emporte-pièce 11 jusqu'à atteindre la butée que constitue le collet 11b. Il suffit que l'emporte-pièce 11 soit solidement enfoncé dans la masse de la poutre 20, même partiellement.

Dans le cas où il est souhaité d'intercaler, entre la poutre 20 et le faux plafond à poser, une couche souple d'isolation -notamment thermique-, l'emporte-pièce 11 permet avantageusement d'épingler solidement et durablement une nappe 40 d'isolation sous la poutre 20. Egalement, l'emporte-pièce 11 permet de découper/perforer la nappe 40 d'isolation de façon très "propre".

Une fois l'emporte-pièce 11 solidement implanté dans la poutre 20, on visse la tige 12 d'ancrage dans la masse de cette poutre 20. Eventuellement, le vissage va permettre d'achever l'enfoncement de l'emporte-pièce 11 ; le collet 11b se retrouve alors plaqué contre la surface de la zone d'ancrage. Celui-ci exerce un effet de compression sur la nappe 40 d'isolation et permet un contact hermétique entre la nappe 40 d'isolation et la poutre 20.

A noter que pour enfoncer l'emporte-pièce 11 dans la poutre 20, on peut exercer une action de percussion directement sur le collet 11b de l'emporte-pièce 11 ou bien alors sur la tête 12a d'une tige 12 d'ancrage préalablement et partiellement engagée dans l'emporte-pièce 11.

Une fois l'emporte-pièce 11 et la tige 12 d'ancrage solidement ancrés à la poutre 20, on peut alors assembler le reste du dispositif 1 de fixation : tige 14 de raccordement, tête d'assemblage 13, boulons 15a et 15b.

On répète l'opération avec d'autres dispositifs de fixation, au niveau d'autres zones d'ancrage. De préférence, chaque nappe d'isolation utilisée est maintenue plus ou moins tendue, épinglée au moyen de plusieurs dispositifs de fixation.

On assemble aux différents dispositifs 1 de fixation installés les différents profilés 30 constitutifs de l'ossature métallique destinée à recevoir le(s) panneau(x) formant la cloison finale. Et, on termine par la mise en place de cette cloison.

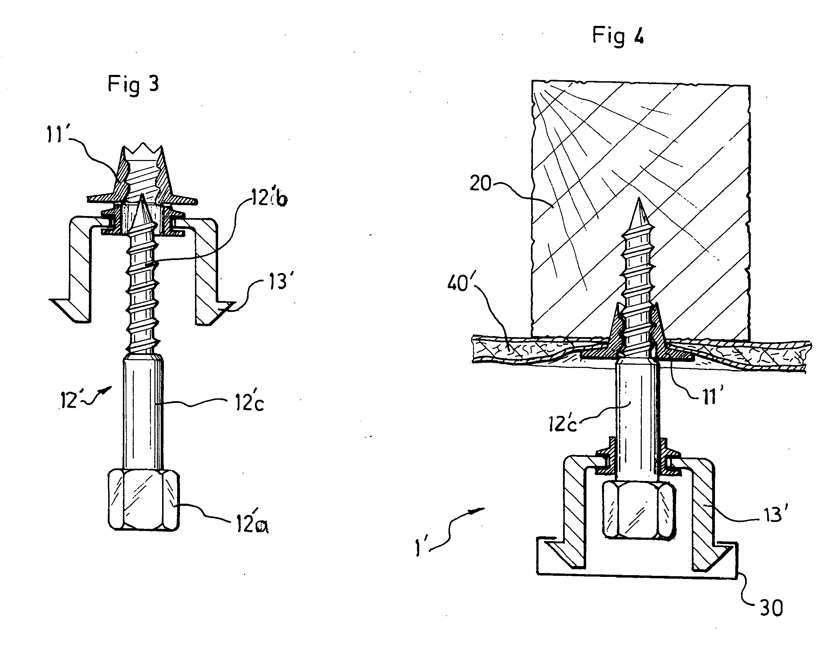

Dans un deuxième mode de réalisation d'un dispositif 1' de fixation, et tel qu'illustré par les figures 3 et 4, un dispositif 1' de fixation conforme à l'invention comprend une tige 12' d'ancrage, un emporte-pièce 11' et une tête d'assemblage 13'.

La différence avec le dispositif 1 de fixation réside essentiellement dans le fait que la tête d'assemblage 13' est adaptée pour pouvoir être connectée directement à la tige 12' d'ancrage, en l'occurrence, le long du col 12'c de ce dernier. Les moyens permettant d'assurer le blocage en position de cette tête d'assemblage 13' sur une partie du col 12'c de la tige 12' d'ancrage ne sont pas illustrés dans les figures annexées.

Comme représentée à la figure 3, l'emporte-pièce 11' et la tête d'assemblage 13' sont initialement fournies à l'utilisateur dans une forme solidaire ; l'emporte-pièce 11' et la tête d'assemblage 13' sont liés l'un à l'autre par des moyens de connexion sécables. Eventuellement, la tige 12' d'ancrage est, préalablement en partie, emmanchée à travers la tête d'assemblage 13' et éventuellement également à travers l'emporte-pièce 11'.

A travers une nappe 40' d'isolation multicouche préalablement appliquée sur une zone d'ancrage d'une structure 20 fixe de bâtiment, et dans la masse de cette structure 20 fixe de bâtiment, on plante l'ensemble du dispositif 1' en frappant la tête 12'a de la tige 12' d'ancrage, par exemple avec un marteau.

On prendra soin de planter l'emporte-pièce 11' et la tige 12' d'ancrage le plus verticalement possible. On visse alors la tige 12' d'ancrage dans la masse de la structure 20 fixe, à travers la nappe 40' d'isolation, la tête d'assemblage 13' et l'emporte-pièce 11'. Une fois la tige 12' d'ancrage arrivée en butée, on rompt les moyens de connexion sécables qui maintiennent solidaires l'emporte-pièce 11' et la tête d'assemblage 13'.

On fait coulisser la tête d'assemblage 13' le long du col 12'c de la tige 12' d'ancrage.

Après avoir choisi la position finale de la tête d'assemblage 13' sur le col 12'c de la tige 12' d'ancrage, on bloque en position cette tête d'assemblage 13'.

On répète l'opération avec d'autres dispositifs 1' de fixation, au niveau d'autres zones d'ancrage. On assemble aux différents dispositifs 1' de fixation installés les différents profilés 30 constitutifs de l'ossature métallique destinée à recevoir le(s) panneau(x) formant la cloison finale. Et, on termine par la mise en place de cette cloison.

## Revendications

1. - Dispositif de fixation d'une cloison à une structure (20) fixe de bâtiment, comprenant au moins :
- une tige (12; 12') d'ancrage présentant une portion (12b; 12'b) filetée ayant une extrémité libre acérée de sorte qu'elle peut percer ladite structure (20) fixe de bâtiment et qu'elle peut être vissée dans cette structure (20) fixe de bâtiment,
- des moyens d'assemblage adaptés pour permettre son assemblage à un élément de cloison,
**caractérisé en ce qu'**il comprend :
- un dispositif (11 ; 11'), dit emporte-pièce, doté d'un alésage traversant et d'une extrémité (11a) affûtée adaptée pour pouvoir réaliser une découpe dans une nappe d'isolation,
la tige (12; 12') d'ancrage et l'alésage traversant de l'emporte-pièce (11 ; 11') étant de dimensions adaptées pour permettre un emmanchement de ladite tige (12 ; 12') d'ancrage dans l'emporte-pièce (11 ; 11') et pour permettre à sa portion filetée de dépasser de l'emporte-pièce (11 ; 11') de façon à pouvoir s'étendre dans la structure (20) fixe de bâtiment.

2. - Dispositif selon la revendication 1, **caractérisé en ce que** ledit emporte-pièce (11 ; 11') présente une forme globalement tronconique avec une pointe (11a) ouverte à bord affûté.

3. - Dispositif selon la revendication 2, **caractérisé en ce que**, opposé à ladite pointe (11a), l'emporte-pièce (11 ; 11') présente une base à bord (11b) évasé s'étendant selon une direction centrifuge.

4. - Dispositif selon l'une des revendications 1 à 3, **caractérisé en ce que** l'alésage traversant dudit emporte-pièce (11 ; 11') définit une paroi interne taraudée adaptée pour permettre un emmanchement de la portion (12b ; 12'b) filetée de la tige (12 ; 12') d'ancrage, par vissage.

5. - Dispositif selon l'une des revendications 1 à 4, **caractérisé en ce que** l'extrémité (11a) affûtée dudit emporte-pièce (11 ; 11') est dentelée.

6. - Dispositif selon l'une des revendications 3 à 5, **caractérisé en ce que** ladite tige (12 ; 12') d'ancrage présente une tête (12a ; 12'a), opposée à l'extrémité libre acérée, adaptée pour pouvoir venir en appui sur le bord (11b) évasé de l'emporte-pièce (11 ; 11').

7. - Dispositif selon l'une des revendications 1 à 6, **caractérisé en ce que** la tige (12 ; 12) d'ancrage est adaptée pour pouvoir être raccordée à une tête d'assemblage (13 ; 13').

8. - Dispositif selon la revendication 7, **caractérisé en ce que** ledit dispositif (1) de fixation comprend une tige (14) de raccordement adaptée pour permettre un raccordement de ladite tige (12) d'ancrage à ladite tête d'assemblage (13) ; des moyens de couplage réciproques sont pourvus à une extrémité de ladite tige (14) de raccordement et sur ladite tige (12) d'ancrage ; ladite tête d'assemblage (13) est dotée de moyens adaptés pour permettre son assemblage sur au moins une longueur de ladite tige (14) de raccordement.

9. - Dispositif selon la revendication 7, **caractérisé en ce que** dans ledit dispositif (1') de fixation, la tête d'assemblage (13') est adaptée pour pouvoir être raccordée directement à la tige (12') d'ancrage.

10. - Procédé pour fixer un élément de cloison à une structure fixe de bâtiment et pour immobiliser, entre cet élément de cloison et cette structure fixe de bâtiment, une nappe d'isolation comprenant au moins une couche de structure fibreuse,
**caractérisé en ce qu'**on réalise les opérations suivantes :
• on choisit, sur une structure (20) fixe de bâtiment, une zone d'ancrage adaptée pour pouvoir recevoir un dispositif (1) de fixation comprenant :
- une tige (12 ; 12') d'ancrage présentant une portion (12b ; 12b) filetée ayant une extrémité libre acérée de sorte qu'elle peut percer ladite structure (20) fixe de bâtiment et qu'elle peut être vissée dans cette structure (20) fixe de bâtiment,
- des moyens d'assemblage adaptés pour permettre son assemblage à un élément de cloison,
- un dispositif (11 ; 11'), dit emporte-pièce, doté d'un alésage traversant et d'une extrémité (11a) affûtée adaptée pour pouvoir réaliser une découpe dans une nappe d'isolation,
la tige (12 ; 12') d'ancrage et l'alésage traversant de l'emporte-pièce (11 ; 11') étant de dimensions adaptées pour permettre un emmanchement de ladite tige (12 ; 12') d'ancrage dans l'emporte-pièce (11 ; 11') et pour permettre à sa portion filetée de dépasser de l'emporte-pièce (11 ; 11') de façon à pouvoir s'étendre dans la structure (20) fixe de bâtiment,
• on positionne au moins une nappe (40 ; 40') d'isolation à recouvrement de ladite zone d'ancrage,
• au niveau de ladite zone d'ancrage, on enfonce, dans ladite structure (20) fixe de bâtiment et au travers de la nappe (40 ; 40') d'isolation, ledit emporte-pièce (11 ; 11'), puis
• on visse la tige (12 ; 12') d'ancrage dans la structure (20) fixe de bâtiment, au travers dudit emporte-pièce (11 ; 11') et au travers de la nappe (40 ; 40') d'isolation perforée par cet emporte-pièce (11 ; 11'), et
• on assemble le reste du dispositif (1 ; 1') de fixation et l'élément (30) de cloison.

11. - Procédé selon la revendication 10, **caractérisé en ce qu'**on utilise un dispositif (1 ; 1') de fixation conforme à l'une des revendications 1 à 8.

12. - Procédé selon l'une des revendications 10 ou 11, **caractérisé en ce qu'**on assemble le dispositif (1 ; 1') de fixation et l'élément de cloison par l'intermédiaire d'un profilé (30) métallique.

13. - Procédé selon l'une des revendications 10 à 12, **caractérisé en ce que**, au niveau de la zone d'ancrage, on comprime ladite nappe (40 ; 40') d'isolation en enfonçant l'emporte-pièce (11 ; 11') jusqu'à arriver en butée.
